# EUROPEAN PATENT APPLICATION

(11) **EP 1 535 662 A1**
(43) Date of publication of application: **01.06.2005**
(21) Application number: 03741162.6
(22) Date of filing: 03.07.2003
(51) Int. Cl.: B01J 23/89, B01J 23/68, B01J 23/58, B01J 23/656, B01D 53/94

(54) **CATALYST FOR EXHAUST GAS PURIFICATION**

(30) Priority: 09.07.2002 JP 2002200592
(71) Applicant: DAIHATSU MOTOR COMPANY, LTD., Ikeda-shi, Osaka-fu 563-8651 (JP)
(72) Inventor: TANAKA, Hirohisa, c/o SHIGA TECHNICAL CENTER, Ryuo-cho, Gamo-gun, Shiga 520-2593 (JP); TAN, Isao, c/o SHIGA TECHNICAL CENTER, Ryuo-cho, Gamo-gun, Shiga 520-2593 (JP); UENISHI, Mari, c/o SHIGA TECHNICAL CENTER, Ryuo-cho, Gamo-gun, Shiga 520-2593 (JP); KAJITA, Nobuhiko, c/o SHIGA TECHNICAL CENTER, Ryuo-cho, Gamo-gun, Shiga 520-2593 (JP); TANIGUCHI, Masashi, c/o SHIGA TECHNICAL CENTER, Ryuo-cho, Gamo-gun, Shiga 520-2593 (JP)
(74) Representative: Teipel, Susanne, Dr.
(86) International application number: PCT/JP2003/008437
(87) International publication number: WO 2004/004897

(57) **Abstract**

To provide an exhaust gas purifying catalyst which can maintain the catalytic activity of Pt at a high level over a long time and can achieve satisfactory emission control performance, an exhaust gas purifying catalyst is prepared so as to contain a composite oxide having a perovskite structure represented by the general formula (1):

A₁₋ₓA'ₓB_{1-y-z}B'_{y}Pt_{z}O₃ (1)

wherein A represents at least one element selected from rare-earth elements and essentially including one or more rare-earth elements each having a valence of 3 as the only valence; A' represents at least one element selected from alkaline earth metals and Ag; B represents at least one element selected from Fe, Mn, and Al; B' represents at least one element selected from transition elements excluding Pt, Fe, Mn, Co, and the rare-earth elements; and x, y, and z are atomic ratios satisfying the following relations: 0 < x ≤ 0.5, 0 ≤ y < 0.5, and 0 < z ≤ 0.5.

## Description

### Technical Field

The present invention relates to an exhaust gas purifying catalyst which efficiently purifies carbon monoxide (CO), hydrocarbons (HC), and nitrogen oxides (NOx) contained in emissions (exhaust gases) typically from automobile engines.

### Background Art

Noble metals such as Pt (platinum), Rh (rhodium), and Pd (palladium) have been widely used as catalytic components of three-way catalysts which can simultaneously clean up carbon monoxide (CO), hydrocarbons (HC), and nitrogen oxides (NOx) contained in emissions.

Among these noble metals, Pt satisfactorily oxidizes CO even at low temperatures but exhibits insufficient thermostability. For improving the thermostability, Pt is supported by a composite oxide, for example, having a perovskite structure represented by a general formula: ABO₃ by impregnation. In addition, by incorporating Pt into a composite oxide as its constitutional component, the thermostability can further be improved and emission control performance can be increased than in the case where Pt is supported by such a composite oxide.

Proposed examples of such composite oxides each having a perovskite structure and containing Pt as a constituent are La_{0.4}Sr_{0.6}Co_{0.95}Pt_{0.05}O₃ (Japanese Laid-open (Unexamined) Patent Publication No. Hei 5-76762); La_{0.9}Ce_{0.1}Co_{0.98}Pt_{0.02}O₃, La_{1.0}Co_{0.9}Pt_{0.1}O₃, and La_{1.0}Co_{0.8}Pt_{0.2}O₃ (Japanese Laid-open (Unexamined) Patent Publication No. Hei 6-100319); La_{0.8}Sr_{0.2}Cr_{0.95}Pt_{0.05}O₃, La_{1.0}Ni_{0.98}Pt_{0.02}O₃, La_{1.0}Co_{0.9}Pt_{0.1}O₃, La_{1.0}Fe_{0.8}Pt_{0.2}O₃, and La_{0.8}Sr_{0.2}Cr_{0.95}Pt_{0.05}O₃ (Japanese Laid-open (Unexamined) Patent Publication No. Hei 6-304449); and La_{1.0}Co_{0.9}Pt_{0.1}O₃, La_{1.0}Fe_{0.8}Pt_{0.2}O₃, La_{1.0}Mn_{0.98}Pt_{0.02}O₃, La_{0.8}Sr_{0.2}Cr_{0.95}Pt_{0.05}O₃, La_{1.0}Co_{0.95}Pt_{0.05}O₃, and La_{1.0}Mn_{0.98}Pt_{0.02}O₃ (Japanese Laid-open (Unexamined) Patent Publication No. Hei 7-116519) , La_{0.2}Ba_{0.7}Y_{0.1}Cu_{0.48}Cr_{0.48}Pt_{0.04}O₃ and La_{0.9}Ce_{0.1}Co_{0.9}Pt_{0.05}Ru_{0.05}O₃ (Japanese Laid-open (Unexamined) Patent Publication No. Hei 8-217461).

When the above-mentioned composite oxide comprises a rare-earth element alone on the A site and Cr (chromium), Ni (nickel), and/or Cu (copper) alone as a transition element in addition to Pt on the B site of the perovskite structure represented by the general formula: ABO₃, Pt becomes unstable in the perovskite structure under oxidative-reducing atmospheres, its grains grow after long-term use and the resulting catalyst may exhibit remarkably reduced catalytic activity.

### Disclosure of Invention

Accordingly, an object of the present invention is to provide an exhaust gas purifying catalyst which can maintain the catalytic activity of Pt at a high level over a long time and can achieve satisfactory emission control performance.

The present invention provides an exhaust gas purifying catalyst containing a composite oxide having a perovskite structure represented by the general formula (1):

A₁₋ₓA'ₓB_{1-y-z}B'_{y}Pt₂O₃ (1)

wherein A represents at least one element selected from rare-earth elements which essentially include one or more rare-earth elements each having a valence of 3 as the only valence; A' represents at least one element selected from alkaline earth metals and Ag; B represents at least one element selected from Fe, Mn, and Al; B' represents at least one element selected from transition elements excluding Pt, Fe, Mn, Co, and the rare-earth elements; x is an atomic ratio satisfying the following relation: 0 < x ≤ 0.5; y is an atomic ratio satisfying the following relation: 0 ≤ y < 0.5; and z is an atomic ratio satisfying the following relation: 0 < z ≤ 0.5.

It is preferred that A represents at least one element selected from La, Nd, and Y; A' represents at least one element selected from Mg, Ca, Sr, Ba, and Ag; and B' represents at least one element selected from Rh and Ru in the general formula (1).

In the general formula (1), y and z preferably satisfy the following relation: 0 < y + z ≤ 0.5.

Preferably, x and z in the general formula (1) satisfy the following relation: x = z, provided that x and z satisfy the following relation: 2x = z when A' is Ag.

### Best Mode for Carrying Out the Invention

The exhaust gas purifying catalyst of the present invention is, the general formula (1)

To achieve the above object, the exhaust gas purifying catalyst of the present invention comprises a composite oxide having a perovskite structure represented by the general formula (1):

A₁₋ₓA'ₓB_{1-y-z}B'_{y}Pt_{z}O₃ (1)

wherein A represents at least one element selected from rare-earth elements and essentially including one or more rare-earth elements each having a valence of 3 as the only valence; A' represents at least one element selected from alkaline earth metals and Ag; B represents at least one element selected from Fe, Mn, and Al; B' represents at least one element selected from transition elements excluding Pt, Fe, Mn, Co, and the rare-earth elements; x is an atomic ratio satisfying the following relation: 0 < x ≤ 0.5; y is an atomic ratio satisfying the following relation: 0 ≤ y < 0.5; and z is an atomic ratio satisfying the following relation: 0 < z ≤ 0.5.

More specifically, the composite oxide has a perovskite structure and essentially comprises, on the A site, at least one element which is represented by A, is selected from rare-earth elements and essentially includes one or more rare-earth elements each having a valence of 3 as the only valence, and at least one element which is represented by A' and is selected from alkaline earth metals and Ag. Pt can be stably contained in the perovskite structure by allowing the A site to essentially comprise at least one element which is represented by A, is selected from rare-earth elements and essentially includes one or more rare-earth elements each having a valence of 3 as the only valence, and at least one element which is represented by A' and is selected from alkaline earth metals and Ag.

In addition, the composite oxide, on the B site, essentially comprises at least one element which is represented by B and is selected from Fe, Mn, and Al, optionally comprises at least one element which is represented by B' and selected from transition elements excluding Pt, Fe, Mn, Co, and the rare-earth elements, and essentially comprises Pt. Pt can further be stably contained in the perovskite structure by allowing the B site to essentially comprise Pt and at least one element represented by B selected from Fe, Mn, and Al.

The rare-earth element represented by A on the A site essentially comprises one or more rare-earth elements each having a valence of 3 as the only valence. The "rare-earth element having a valence of 3 as the only valence" is a rare-earth element always having a valence of 3. Examples thereof include Sc (scandium), Y (yttrium), La (lanthanum), Nd (neodymium), Pm (promethium), Gd (gadolinium), Dy (dysprosium), Ho (holmium), Er (erbium), and Lu (lutetium).

La, Nd, and Y are preferred as these rare-earth elements each having a valence of 3 as the only valence. The use of La, Nd, and/or Y further stabilizes the perovskite structure.

The rare-earth element represented by A may further comprise one or more rare-earth elements each having a variable valence of 3 or 4, such as Ce (cerium), Pr (praseodymium), and Tb (terbium) and/or a rare-earth element having a variable valence of 2 or 3, such as Sm (samarium), Eu (europium), Tm (thulium), and Yb (ytterbium). In this case, the atomic ratio of the rare-earth element having a valence of 3 as the only valence is preferably 0.5 or more. If the atomic ratio of the rare-earth element having a valence of 3 as the only valence on the A site is less than 0.5, Pt may not be stabilized in the perovskite structure.

These rare-earth elements can be used alone or in combination.

Examples of the alkaline earth metal represented by A' on the A site include Be (beryllium), Mg (magnesium), Ca (calcium), Sr (strontium), Ba (barium), and Ra (radium). These alkaline earth metals can be used alone or in combination.

Examples of the alkaline earth metal and/or Ag represented by A' include alkaline earth metals such as Be, Mg, Ca, Sr, Ba, and Ra, and/or Ag. Preferred examples thereof are Mg, Ca, Sr, Ba, and/or Ag. The use of Mg, Ca, Sr, Ba, and/or Ag further stabilizes the perovskite structure.

On the A site, x is an atomic ratio satisfying the following relation: 0 < x ≤ 0.5. Namely, the alkaline earth metal and/or Ag represented by A', alone or in combination in arbitrary proportions, is contained on the A site in the total atomic ratio of A' of 0.5 or less, and preferably 0.2 or less. The rare-earth element(s) represented by A, alone or in combination in arbitrary proportions, is contained on the A site in such a total atomic ratio of A as to be the balance of the alkaline earth metal and/or Ag represented by A'. If the atomic ratio of the alkaline earth metal and/or Ag represented by A' exceeds 0.5, Pt may not be stabilized in the perovskite structure.

Each of Fe (iron), Mn (manganese), and Al (aluminum) which are represented by B and essentially contained together with Pt on the B site can be used alone or in combination. The use of Fe, Mn, and/or Al further stabilizes the perovskite structure under a reducing atmosphere. The use of Fe reduces environmental loads and improves the safety.

The transition elements represented by B' excluding Pt, Fe, Mn, Co, and the rare-earth elements is arbitrarily contained on the B site with Pt. Such transition elements are not specifically limited and include elements having atomic numbers of 22 (Ti) through 30 (Zn), atomic numbers of 40 (Zr) through 48 (Cd), and atomic numbers of 72 (Hf) through 80 (Hg) in the Periodic Table of Elements (IUPAC, 1990), except for Pt, Fe, Mn, and Co. Specific examples thereof include Cr (chromium), Ni (nickel), Cu (copper), Rh (rhodium), and Ru (ruthenium), of which Rh and Ru are preferred. The use of Rh and/or Ru improves the activity at low temperatures. These transition elements can be used alone or in combination.

On the B site, y is an atomic ratio satisfying the following relation: 0 ≤ y < 0.5. Namely, each of the transition elements represented by B' and excluding Pt, Fe, Mn, Co, and the rare-earth elements, alone or in combination in an arbitrary atomic ratio, is contained on the B site in an total atomic ratio of B' of less than 0.5, and preferably less than 0.4. If the atomic ratio of the transition elements excluding Pt, Fe, Mn, Co, and the rare-earth elements is 0.5 or more, Pt may not be stabilized in the perovskite structure. When the transition element represented by B' excluding Pt, Fe, Mn, Co, and the rare-earth elements is Rh and/or Ru, the cost may not be reduced.

The atomic ratio z satisfies the relation: 0 < z ≤ 0.5. Namely, Pt is contained on the B site in an atomic ratio of 0.5 or less. If the atomic ratio of Pt exceeds 0.5, the cost may not be reduced.

Each of Fe (iron), Mn (manganese), and Al (aluminum) represented by B is contained on the B site alone or in combination in an arbitrary atomic ratio so that the total amount of B is the balance of Pt and the transition element represented by B' excluding Pt, Fe, Mn, Co, and the rare-earth elements.

On the B site, y and z preferably satisfy the following relation: 0 < y + z ≤ 0.5. Namely, the total atomic ratio of Pt and the transition element represented by B' excluding Pt, Fe, Mn, Co, and the rare-earth elements is 0.5 or less and preferably 0.4 or less. Such an atomic ratio further stabilizes the perovskite structure.

In the composite oxide of the present invention having a perovskite structure, it is preferred that x and z satisfy the relation: x = z, provided that x and z satisfy the relation: 2x = z when A' is Ag. Namely, the atomic ratio of A' is preferably equal to that of Pt when A' is an alkaline earth metal, and it is preferably half that of Pt when A' is Ag. By satisfying these conditions, Pt easily stands at a valence of 4 and is further stabilized in the perovskite structure.

The composite oxide of the present invention having a perovskite structure can be prepared according to any suitable procedure for the preparation of composite oxides. Examples thereof are coprecipitation process, citrate complex process, and alkoxide process.

In the coprecipitation process, an aqueous mixed salt solution containing salts of the above-mentioned elements in the stoichiometric ratio is prepared. The aqueous mixed salt solution is coprecipitated by the addition of a neutralizing agent, and the resulting coprecipitate is dried and subjected to heat treatment.

Examples of the salts of the elements are inorganic salts such as sulfates, nitrates, chlorides, and phosphates; and organic salts such as acetates and oxalates, of which nitrates and acetates are preferred. The aqueous mixed salt solution can be prepared, for example, by adding the salts of the elements to water so as to establish the stoichiometric ratio and mixing them with stirring.

Then, the aqueous mixed salt solution is coprecipitated by adding the neutralizing agent thereto. The neutralizing agent includes, but is not specifically limited to, ammonia; organic bases including amines such as triethylamine and pyridine; and inorganic bases such as sodium hydroxide, potassium hydroxide, potassium carbonate, and ammonium carbonate. The neutralizing agent is added dropwise to the aqueous mixed salt solution so that the solution after the addition of the neutralizing agent has a pH of about 6 to 10. This dropwise addition efficiently coprecipitates the salts of the elements.

The resulting coprecipitate is washed with water according to necessity, dried typically by vacuum drying or forced-air drying, and subjected to heat treatment typically at about 500 to 1000°C, preferably at about 600 to 950°C. Thus, the composite oxide is prepared.

In the citrate complex process, for example, an aqueous solution containing citrate and a salt mixture is prepared by mixing citric acid and salts of the elements so as to establish the stoichiometric ratio. The aqueous solution containing citrate and a salt mixture is evaporated to dryness to form citrate complex of the elements. The resulting citrate complex is provisionally baked and then subjected to heat treatment.

The same as listed above can be used as the salts of the elements herein. The aqueous solution containing citrate and a salt mixture can be prepared by initially preparing the aqueous mixed salt solution by the above procedure and adding an aqueous solution of citric acid to the aqueous mixed salt solution. The amount of citric acid is preferably about 2 to 3 moles per 1 mole of the resulting composite oxide.

Then, the aqueous solution containing citrate and a salt mixture is evaporated to dryness to form a citrate complex of the above-mentioned elements. The evaporation to dryness is carried out at a temperature at which the formed citrate complex is not decomposed, for example, at room temperature to about 150°C to remove fluid immediately. The citrate complex of the elements is thus obtained.

The formed citrate complex is then provisionally baked and then subjected to heat treatment. The provisional baking may be carried out by heating at 250°C or higher in vacuum or in an inert atmosphere. The provisionally baked substance is then heated, for example, at about 500 to 1000°C, and preferably at about 600 to 950°C. Thus, the composite oxide is prepared.

In the alkoxide process, for example, an alkoxide mixed solution containing alkoxides of the elements, except for noble metals such as Pt, Ag, Rh, and Ru, in the stoichiometric ratio is prepared. The alkoxide mixed solution is precipitated on hydrolysis by adding an aqueous solution containing salts of the noble metals such as Pt, Ag, Rh, and Ru thereto. The resulting precipitate is dried and then subjected to heat treatment.

Examples of the alkoxides of the individual elements include alcholates each comprising the element and an alkoxy such as methoxy, ethoxy, propoxy, isopropoxy, or butoxy; and alkoxyalcholates of the individual elements represented by the following general formula (2):

E[OCH(R¹)-(CH₂)ₐ-OR²]s (2)

wherein E represents the element; R¹ represents a hydrogen atom or an alkyl group having 1 to 4 carbon atoms; R² represents an alkyl group having 1 to 4 carbon atoms; a is an integer of 1 to 3; and s is an integer of 2 or 3.

More specific examples of the alkoxyalcholates include methoxyethylate, methoxypropylate, methoxybutylate, ethoxyethylate, ethoxypropylate, propoxyethylate, and butoxyethylate.

The alkoxide mixed solution can be prepared, for example, by adding the alkoxides of the individual elements to an organic solvent in such proportions so as to establish the above-mentioned stoichiometric ratio and mixing them with stirring. The organic solvent is not specifically limited, as long as it can dissolve the alkoxides of the individual elements. Examples of such organic solvents include aromatic hydrocarbons, aliphatic hydrocarbons, alcohols, ketones, and esters. Among them, aromatic hydrocarbons such as benzene, toluene, and xylenes are preferred.

Then, the alkoxide mixed solution is precipitated on hydrolysis by adding an aqueous solution containing salts of the noble metals such as Pt, Ag, Rh, and Ru thereto in the above-mentioned stoichiometric ratio. Examples of the aqueous solution containing salts of the noble metals such as Pt, Ag, Rh, and Ru include aqueous nitrate solution, aqueous chloride solution, aqueous hexaammine chloride solution, aqueous dinitrodiammine nitrate solution, hexachloro acid hydrate, and potassium cyanide salt.

The resulting precipitate is dried typically by vacuum drying or forced-air drying and is subjected to heat treatment, for example, at about 500 to 1000°C, and preferably at about 500 to 850°C. Thus, the composite oxide is prepared.

In the alkoxide method, the composite oxide may be alternatively prepared in the following manner. A solution containing organometallic salts of the noble metals such as Pt, Ag, Rh, and Ru is added to the alkoxide mixed solution to obtain a homogenous mixed solution. The homogenous mixed solution is precipitated on hydrolysis by adding water thereto. The resulting precipitate is dried and then subjected to heat treatment.

Examples of the organometallic salts of the noble metals such as Pt, Ag, Rh, and Ru are metal chelate complexes of the noble metals such as Pt, Ag, Rh, and Ru, including carboxylic acid salts of the noble metals such as Pt, Ag, Rh, and Ru formed typically from acetate or propionate; and diketone complexes of the noble metals such as Pt, Ag, Rh, and Ru formed from diketone compounds represented by the following general formula (3):

R³COCH₂COR⁴ (3)

wherein R³ represents an alkyl group having 1 to 4 carbon atoms, a fluoroalkyl group having 1 to 4 carbon atoms or an aryl group; and R⁴ represents an alkyl group having 1 to 4 carbon atoms, a fluoroalkyl group having 1 to 4 carbon atoms, an aryl group, or an alkyloxy group having 1 to 4 carbon atoms.

In above-mentioned general formula (3), examples of the alkyl group having 1 to 4 carbon atoms of R³ and R⁴ include, for example, methyl, ethyl, propyl, isopropyl, butyl, s-butyl, and t-butyl. The fluoroalkyl groups each having 1 to 4 carbon atoms of R³ and R⁴ include, for example, trifluoromethyl. The aryl groups of R³ and R⁴ include, for example, phenyl. The alkyloxy group having 1 to 4 carbon atoms of R⁴ includes, for example, methoxy, ethoxy, propoxy, isopropoxy, butoxy, s-butoxy, and t-butoxy.

Specific examples of the diketone compounds include 2,4-pentanedione, 2,4-hexanedione, 2,2-dimethyl-3,5-hexanedione, 1-phenyl-1,3-butanedione, 1-trifluoromethyl-1,3-butanedione, hexafluoroacetylacetone, 1,3-diphenyl-1,3-propanedione, dipivaloylmethane, methyl acetoacetate, ethyl acetoacetate, and t-butyl acetoacetate.

The solution containing the organometallic salts of the noble metals such as Pt, Ag, Rh, and Ru can be prepared, for example, by adding an organometallic salt of the noble metals such as Pt, Ag, Rh, and Ru to an organic solvent in such proportions as to establish the above-mentioned stoichiometric ratio, and mixing them with stirring. The organic solvent herein can be any of the above-mentioned organic solvents.

The above-prepared solution containing organometallic salts of the noble metals such as Pt, Ag, Rh, and Ru is added to the alkoxide mixed solution to obtain a homogenous mixed solution, and the homogenous mixed solution is precipitated on hydrolysis by adding water thereto.

The resulting precipitate is dried typically by vacuum drying or forced-air drying and is subjected to heat treatment, for example, at about 500 to 1000°C, and preferably at about 500 to 850°C. The composite oxide is thus prepared.

The thus-prepared composite oxide according to the present invention can be used as intact as an exhaust gas purifying catalyst but is generally subjected to a conventional procedure to form an exhaust gas purifying catalyst. For example, the composite oxide is supported by a catalyst carrier.

The catalyst carrier is not specifically limited and includes, for example, known catalyst carriers such as honeycomb monolith carriers made of cordierite and the like.

The composite oxide may be supported by the catalyst carrier, for example, by adding water to the composite oxide thus obtained to form a slurry, applying the slurry to the catalyst carrier, drying and subjecting the applied slurry to heat treatment at about 300 to 800°C, and preferably at about 300 to 600°C.

The resulting exhaust gas purifying catalyst of the present invention containing the composite oxide can stabilize Pt in the perovskite structure and allows Pt to be finely and highly dispersed in the composite oxide and maintains its high catalytic activity even in long-term use. This is because of self-regenerative function, in which solution in an oxidative atmosphere and deposition in a reducing atmosphere are repeated. The self-regenerative function of Pt with respect to the perovskite structure due to solution and deposition in oxidative-reducing atmospheres can achieve high catalytic activity even in a small amount of Pt.

As a result, the exhaust gas purifying catalyst of the present invention containing the composite oxide can maintain the catalytic activity of Pt at a high level over a long time and can achieve satisfactory emission control performance. The catalyst can be suitably used as an exhaust gas purifying catalyst for automobiles.

### EXAMPLES

The present invention will be illustrated in further detail with reference to several examples and comparative examples below, which are never intended to limit the scope of the invention.

### Example 1

Initially, an alkoxide mixed solution was prepared by charging 36.6 g (0.090 mol) of lanthanum ethoxyethylate [La(OC₂H₄OEt)₃], 2.7 g (0.010 mol) of strontium ethoxyethylate [Sr(OC₂H₄OEt)₂], 17.4 g (0.054 mol) of iron ethoxyethylate [Fe(OC₂H₄OEt)₃], and 8.4 4 g (0.036 mol) of manganese ethoxyethylate [Mn(OC₂H₄OEt)₂] in a 500-mL round-bottomed flask and dissolving them in 200 mL of toluene added thereto with stirring. Separately, 3.93 g (0.010 mol) of platinum acetylacetonate [Pt(CH₃COCHCOCH₃)₂] was dissolved in 200 mL of toluene, and the resulting solution was added to the alkoxide mixed solution in the round-bottomed flask to obtain a homogenous mixed solution containing LaSrFeMnPt.

Next, 200 mL of deionized water was added dropwise to the round-bottomed flask over about fifteen minutes to form a viscous brown precipitate on hydrolysis.

After stirring at room temperature for two hours, toluene and water were distilled off under reduced pressure to obtain a precursor of the LaSrFeMnPt composite oxide. The precursor was placed on a petri dish, subjected to forced-air drying at 60°C for twenty-four hours, subjected to heat treatment at 600°C in the atmosphere for one hour using an electric furnace to obtain a blackish brown powder.

The X-ray powder diffraction analysis of the powder revealed that it was identified as a single crystal phase comprising a composite oxide having a perovskite structure of La_{0.90}Sr_{0.10}Fe_{0.54}Mn_{0.36}Pt_{0.10}O₃. The powder was found to have a specific surface area of 27 m²/g and a Pt content in the composite oxide of 7.77% by mass.

### Example 2

Initially, an alkoxide mixed solution was prepared by charging 34.6 g (0.095 mol) of lanthanum methoxyethylate [La(OC₂H₄OMe)₃], 20.2 g (0.080 mol) of aluminum methoxyethylate [Al(OC₂H₄OMe)₃], and 2.0 g (0.010 mol) of manganese methoxyethylate [Mn(OC₂H₄OMe)₂] in a 500-mL round-bottomed flask and dissolving them in 200 mL of toluene added thereto with stirring. Separately, 1.04 g (0.005 mol) of silver acetylacetonate [Ag(CH₃COCHCOCH₃)], 3.14 g (0.008 mol) of platinum acetylacetonate [Pt(CH₃COCHCOCH₃)₂], and 0.80 g (0.002 mol) of ruthenium acetylacetonate [Ru(CH₃COCHCOCH₃)₃] were dissolved in 200 mL of toluene. The resulting solution was added to the alkoxide mixed solution in the round-bottomed flask to obtain a homogenous mixed solution containing LaAgAlMnPtRu.

Subsequently, a blackish brown powder was obtained by the procedure of Example 1, except for carrying out the heat treatment at 800°C for two hours.

The X-ray powder diffraction analysis of the powder revealed that it was identified as a single crystal phase comprising a composite oxide having a perovskite structure of La_{0.95}Ag_{0.05}Al_{0.80}Mn_{0.10}Pt_{0.08}Ru_{0.02}O₃. The powder was found to have a specific surface area of 19 m²/g, and, in the composite oxide, a Ag content of 2.34% by mass, a Pt content of 6.78% by mass, and a Ru content of 0.88% by mass.

### Example 3

Initially, an alkoxide mixed solution was prepared by charging 32.9 g (0.080 mol) of neodymium methoxypropylate [Nd(OCHMeCH₂OMe)₃], 3.2 g (0.001 mol) of barium methoxypropylate [Ba(OCHMeCH₂OMe)₂], 2.0 g (0.010 mol) of magnesium methoxypropylate [Mg(OCHMeCH₂OMe)₂], and 25.0 g (0.085 mol) of aluminum methoxypropylate [Al(OCHMeCH₂OMe)₃] in a 500-mL round-bottomed flask and dissolving them in 200 mL of xylene added thereto with stirring. Separately, 3.93 g (0.010 mol) of platinum acetylacetonate [Pt(CH₃COCHCOCH₃)₂] and 2.00 g (0.005 mol) of rhodium acetylacetonate [Rh(CH₃COCHCOCH₃)₃] were dissolved in 200 mL of xylene. The resulting solution was added to the alkoxide mixed solution in the round-bottomed flask to obtain a homogenous mixed solution containing NdBaMgAlPtRh.

Subsequently, a blackish brown powder was obtained by the procedure of Example 1, except for carrying out the heat treatment at 600°C for two hours.

The X-ray powder diffraction analysis of the powder revealed that it was identified as a single crystal phase comprising a composite oxide having a perovskite structure of Nd_{0.80}Ba_{0.10}Mg_{0.10}Al_{0.85}Pt_{0.10}Rh_{0.05}O₃. The powder was found to have a specific surface area of 29 m²/g, and, in the composite oxide, a Pt content of 8.40% by mass and a Rh content of 2.21% by mass.

### Example 4

Initially, an alkoxide mixed solution was prepared by charging 36.6 g (0.090 mol) of lanthanum ethoxyethylate [La(OC₂H₄OEt)₃], 2.2 g (0.010 mol) of calcium ethoxyethylate [Ca(OC₂H₄OEt)₂], and 29.0 g (0.090 mol) of iron ethoxyethylate [Fe(OC₂H₄OEt)₃] in a 500-mL round-bottomed flask and dissolving them in 200 mL of toluene with stirring.

Next, 22.9 g (corresponding to 1.95 g (0.010 mol) of Pt) of dinitrodiammine platinum nitrate solution having a Pt content of 8.50% by mass was diluted with 200 mL of deionized water, and the resulting solution was added dropwise to the alkoxide mixed solution in the round-bottomed flask over about fifteen minutes to obtain a brown viscous precipitate on hydrolysis.

Subsequently, a blackish brown powder was prepared by the procedure of Example 1, except for carrying out the heat treatment at 700°C for two hours.

The X-ray powder diffraction analysis of the powder revealed that it was identified as a single crystal phase comprising a composite oxide having a perovskite structure of La_{0.90}Ca_{0.10}Fe_{0.90}Pt_{0.10}O₃. The powder was found to have a specific surface area of 19 m²/g and a Pt content in the composite oxide of 7.90% by mass.

### Example 5

Initially, a homogenous mixed solution was prepared by dissolving and homogenously mixing 19.1 g (0.050 mol) of yttrium nitrate (Y(NO₃)₃·6H₂O), 7.5 g (0.050 mol) of strontium nitrate (Sr(NO₃)), 20.2 g (0.050 mol) of iron nitrate (Fe(NO₃)₃·9H₂O), and 114.8 g (corresponding to 9.75 g (0.050 mol) of Pt) of dinitrodiammine platinum nitrate solution having a Pt content of 8.50% by mass in 100 mL of pure water. Next, 46.1 g (0.240 mol) of citric acid was dissolved in 100 mL of pure water, and the resulting solution was added to the homogenous mixed solution to obtain an aqueous solution of citric acid and salts containing YSrFePt.

The aqueous solution of citric acid and salts was evaporated to dryness on an oil bath at 60°C to 80°C with evacuation using a rotary evaporator. After passage of about three hours and when the solution came into a starch-syrup-like state, the temperature of the oil bath was gradually raised, followed by drying at 250°C in vacuum for one hour to obtain a citrate complex.

The above-prepared citrate complex was baked at 300°C in the atmosphere for three hours and further pulverized in a mortar. Thereafter, it was baked again at 700°C in the atmosphere for three hours to obtain a powder.

The X-ray powder diffraction analysis of the powder revealed that it was identified as a single crystal phase comprising a composite oxide having a perovskite structure of Y_{0.50}Sr_{0.50}Fe_{0.50}Pt_{0.50}O₃ The powder was found to have a specific surface area of 22.5 m²/g and a Pt content in the composite oxide of 37.27% by mass.

### Example 6

Initially, an aqueous mixed salt solution containing LaSrMnPt was prepared by dissolving and homogenously mixing 39.0 g (0.090 mol) of lanthanum nitrate (La(NO₃)₃·6H₂O), 2.7 g (0.010 mol) of strontium nitrate (Sr(NO₃)₃), 31.4 g (0.090 mol) of manganese nitrate (Mn(NO₃)₂·6H₂O) and 22.9 (corresponding to 1.95 g (0.010 mol) of Pt) of dinitrodiammine platinum nitrate solution having a Pt content of 8.50% by mass in 200 mL of ion-exchanged water.

The above-prepared solution was coprecipitated by adding an aqueous solution of ammonium carbonate as a neutralizing agent dropwise thereto to a pH of 10. Then the coprecipitate was fully stirred, filtrated and washed with water.

The resulting coprecipitate was dried at 120°C for twelve hours, was baked at 700°C in the atmosphere for three hours to obtain a powder.

The X-ray powder diffraction analysis of the powder revealed that it was identified as a single crystal phase comprising a composite oxide having a perovskite structure of La_{0.90}Sr_{0.10}Mn_{0.90}Pt_{0.10}O₃. The powder was found to have a specific surface area of 20.1 m²/g and a Pt content in the composite oxide of 7.78% by mass.

### Comparative Example 1

A total of 20 g of a commercially available γ-Al₂O₃ having a specific surface area of 180 m²/g was impregnated with Pt using 27.1 g (corresponding to 2.3 g of Pt) of a dinitrodiammine platinum nitrate solution having a Pt content of 8.50% by mass, was subjected to forced-air drying at 60°C for twenty-four hours and was then subjected to heat treatment at 500°C in the atmosphere for one hour using an electric furnace. The amount of Pt supported by γ-Al₂O₃ was 10.3% by mass.

### Comparative Example 2

Initially, a homogenous mixed solution was prepared by dissolving and homogenously mixing 34.6 g (0.080 mol) of lanthanum nitrate (La(NO₃)₃·6H₂O), 3.83 g (0.010 mol) of yttrium nitrate (Y(NO₃)₃·6H₂O), 2.74 g (0.010 mol) of strontium nitrate (Sr(NO₃)₃), 21.3 g (0.090 mol) of cobalt nitrate (Co(NO₃)₂·3H₂O), and 22.9 (corresponding to 1.95 g (0.010 mol) of Pt) of a dinitrodiammine platinum nitrate solution having a Pt content of 8.50% by mass in 100 mL of pure water. Then, 46.1 g (0.240 mol) of citric acid was dissolved in pure water, and the resulting solution was added to the homogenous mixed solution to obtain an aqueous solution of citric acid and salts containing LaYSrCoPt.

Subsequently, a powder was obtained by the procedure of Example 5.

The X-ray powder diffraction analysis of the powder revealed that it was identified as a single crystal phase comprising a composite oxide having a perovskite structure of La_{0.80}Y_{0.10}Sr_{0.10}Co_{0.90}Pt_{0.10}O₃. The powder was found to have a specific surface area of 24.6 m²/g and a Pt content in the composite oxide of 7.82% by mass.

### Comparative Example 3

An aqueous mixed salt solution containing LaSrNiCoPt was prepared by dissolving and homogenously mixing 39.0 g (0.090 mol) of lanthanum nitrate (La(NO₃)₃·6H₂O), 1.35 g (0.005 mol) of strontium nitrate (Sr(NO₃)₃), 1.45 g (0.005 mol) of nickel nitrate (Ni(NO₃)₂·6H₂O), 21.3 g (0.090 mol) of cobalt nitrate (Co(NO₃)₂·3H₂O), and 22.9 (corresponding to 1.95 g (0.010 mol) of Pt) of a dinitrodiammine platinum nitrate solution having a Pt content of 8.50% by mass in 200 mL of ion-exchanged water.

Subsequently, a powder was prepared by the procedure of Example 6.

The X-ray powder diffraction analysis of the powder revealed that it was identified as a single crystal phase comprising a composite oxide having a perovskite structure of La_{0.90}Sr_{0.05}Ni_{0.05}Co_{0.90}Pt_{0.10}O₃. The powder was found to have a specific surface area of 19.6 m²/g and a Pt content in the composite oxide of 7.71% by mass.

### Test Example 1

### 1) Coating to catalyst carrier

A total of 120 mL of deionized water was mixed with 20 g of the powders prepared according to Examples 1 to 6 and Comparative Examples 1 to 3 and 100 g of a powdery composite oxide having a composition of Ce_{0.6}Zr_{0.3}Y_{0.1}O_{0.95}, followed by addition of 21.1 g of zirconia sol (NZS-30B, a product of Nissan Chemical Industries, Ltd.; a solid content of 30% by mass) to obtain a slurry. The slurry was applied by coating to a catalyst carrier comprising a cordierite honeycomb having a diameter of 80 mm, a length of 95 mm, and a grating density of 400 cells/(0.025 m)².

After coating, excess slurry was removed by air blow so as to set the coating amount of the powder at 126 g per 1 L of the catalyst carrier (60 g per one catalyst carrier). After forced-air drying at 120°C for twelve hours, the work was baked at 600°C in the atmosphere for three hours to obtain monolith catalysts containing the powders according to Examples 1 to 6 and Comparative Examples 1 to 3, respectively.

### 2) Endurance test

The above-prepared monolith catalysts were connected to both banks of a V type eight cylinder engine having a displacement of 4 liters and were subjected to an endurance test at a highest temperature in the catalyst bed of 1050°C with a single cycle of 30 seconds repeated for a total of 60 hours.

One cycle of the endurance test was set as follows. Specifically, from Second 0 to Second 5 (a period of 5 seconds), the operation was carried out at a theoretical fuel-air ratio (λ = 1). From Second 5 to Second 28 (a period of 23 seconds), an excessive amount of fuel was fed to the bed (λ = 0.89). From Second 7 to Second 30 (a period of 23 seconds) lagging two seconds from the above, high-pressure secondary air was introduced upstream of the catalysts. From Second 7 to Second 28 (a period of 21 seconds), a slightly excessive amount of air was fed (λ = 1.02) to cause the excessive fuel to burn in the interior of the bed, so as to raise the temperature of the catalyst bed to 1050°C. From Second 28 to Second 30 (a period of 2 seconds), the interior of the bed was returned to the theoretical fuel-air ratio (λ = 1) and the secondary air was kept to be fed to achieve a high-temperature oxidative atmosphere in which the air is in large excess (λ = 1.25).

### 3) Activity determination

Using an in-line four-cylinder engine having a displacement of 1.5 liters, an oscillation (amplitude) of Δλ = ±3.4% (ΔA/F = ±0.5 A/F) of which the center was set in the theoretical fuel-air ratio (λ = 1) was applied to the monolith catalysts at a frequency of 1 Hz. The purification rates of CO, HC, and NOx of the monolith catalysts before and after this endurance test were measured. The results are shown in Table 1. In the measurement, the temperature of the upstream (inlet gas) of the monolith catalysts was kept at 460°C, and the flow rate was set at a space velocity (SV) of 50000 per hour. Table 1 also shows the noble metal content (g) per 1 liter of each of the monolith catalysts.

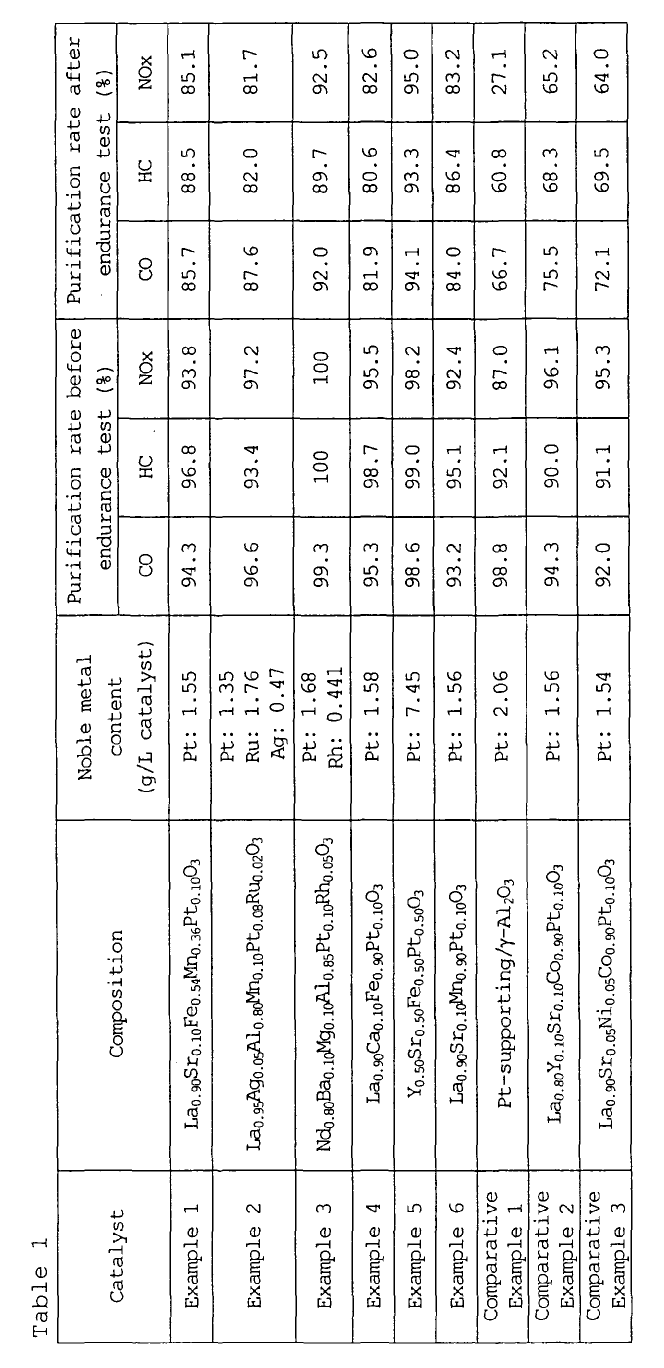

Table 1 shows that the monolith catalysts comprising the powders according to Comparative Examples 1 to 3 exhibit markedly decreased purification rates after the endurance test, and that, in contrast, the monolith catalysts comprising the powders according to Examples 1 to 6 maintain their high activities even after the endurance test.

While the illustrative embodiments and examples of the present invention are provided in the above description, such is for illustrative purpose only and it is not to be construed restrictively. Modification and variation of the present invention which will be obvious to those skilled in the art is to be covered in the following claims.

### Industrial Applicability

The exhaust gas purifying catalyst of the present invention can maintain the catalytic activity of Pt at a high level over a long time, can achieve satisfactory emission control performance and are advantageously usable as an exhaust gas purifying catalyst for automobiles.

## Claims

1. An exhaust gas purifying catalyst comprising a composite oxide having a perovskite structure represented by the general formula (1):
A₁₋ₓA'ₓB_{1-y-z}B'_{y}Pt_{z}O₃ (1)
wherein A represents at least one element selected from rare-earth elements which essentially include one or more rare-earth elements each having a valence of 3 as the only valence; A' represents at least one element selected from alkaline earth metals and Ag; B represents at least one element selected from Fe, Mn, and Al; B' represents at least one element selected from transition elements excluding Pt, Fe, Mn, Co, and the rare-earth elements; x is an atomic ratio satisfying the following relation: 0 < x ≤ 0.5; y is an atomic ratio satisfying the following relation: 0 ≤ y < 0.5; and z is an atomic ratio satisfying the following relation: 0 < z ≤ 0.5.

2. The exhaust gas purifying catalyst according to claim 1, wherein, in the general formula (1), A represents at least one element selected from La, Nd, and Y; A' represents at least one element selected from Mg, Ca, Sr, Ba, and Ag; and B' represents at least one element selected from Rh and Ru.

3. The exhaust gas purifying catalyst according to claim 1, wherein y and z in the general formula (1) satisfy the following relation: 0 < y + z ≤ 0.5.

4. The exhaust gas purifying catalyst according to claim 1, wherein x and z in the general formula (1) satisfy the following relation: x = z, provided that x and z satisfy the following condition: 2x = z when A' is Ag.
